# EUROPEAN PATENT SPECIFICATION

(11) **EP 1 569 507 B1**
(45) Date of publication and mention of the grant of the patent: **06.05.2009**
(21) Application number: 03811056.5
(22) Date of filing: 31.07.2003
(51) Int. Cl.: A01C 11/00, A01C 11/02

(54) **A SEEDLING TRANSPLANTING UNIT WITH ROTARY DISTRIBUTOR FOR PLANTING SEEDLINGS ARRANGED IN TWO ROWS**
EINHEIT ZUM VERPFLANZEN VON SÄMLINGEN MIT DREHVERTEILER ZUMPFLANZEN VON IN ZWEI REIHEN ANGEORDNETEN SÄMLINGEN
UNITE DE REPIQUAGE DE PLANTS MUNIE D'UN DISTRIBUTEUR ROTATIF POUR PLANTER DES PLANTS DISPOSES EN DEUX RANGEES

(30) Priority: 14.11.2002 IT CR20020024
(43) Date of publication of application: 07.09.2005
(73) Proprietor: FERRARI COSTRUZIONI MECCANICHE DI FERRARI FRANCESCO E DARIO & C. S.N.C., 46040 Guidizzolo (Mantova) (IT)
(72) Inventor: FERRARI, Francesco, I-46040 Guidizzolo, Mantova (IT)
(74) Representative: Marcio', Paola
(86) International application number: PCT/IT2003/000482
(87) International publication number: WO 2004/043134

(56) References cited:
- US-A- 1 657 944
- US-A- 4 278 035
- US-A- 4 290 373
- US-A- 4 919 059
- US-A- 5 224 554
- US-A- 5 823 126
- US-B1- 6 394 010

## Description

This invention concerns a seedling transplanting unit with a rotary distributor, capable of planting simultaneously two rows of seedlings, particularly useable for vegetables, salad, tobacco or other kinds of small plants.

Seedling transplanters are used for agricultural or nursery purposes, that essentially comprise a support frame to be connected to a tractor, a rotary distributor or carousel, rotating around a substantially vertical axis, a plurality of containers for the plants, which containers are arranged as a circumference on said carousel, a conveyor suitable for constituting a guide channel for said plants, with the inlet port placed under the carousel, means for expelling the seedlings and a plowshare for carrying out the transplant in the ground.

The carousel is connected to transmission means, making it rotate continuously when the machine advances forwards in a straight line. Means for synchronised opening of said containers are also provided, that enable to periodically drop the seedlings into the underlying conveyor, by means of which they are then conveyed to the furrow made by the plowshare.

Referring to the most widespread types of seedling transplanter, such as the one disclosed in US pat. 4.290.373, the containers consist of generally conical or truncate-conical cups, realized with two half-cones hinged at the base to a horizontal pivot.

The means for synchronised opening generally comprise an arm, rigidly coupled to the frame of the machine, and rollers fixed to one of the two half-cones of each cup. The arm has one end that is located on the trajectory followed by said rollers during rotation of the carousel, approximately above the conveyor inlet port. Therefore, when a roller encounter the end of the arm, it is shifted by the arm itself and the relative cup opens around the fulcrum constituted by said pivot. A spring, or other return means, enables the cups to close until the next passage on the conveyor.

The ejecting device located at the outlet port of the conveyor is also mechanically synchronised with the carousel. An operator facing the carousel refills the empty cups as the seedlings drop into the conveyor. Machines consisting of one or more transplanting units of such type are made, that are fixed to a single support bar, which can be connected to a tractor or other towing means. The distance between the transplanting units can generally be adjusted by mechanical means.

A machine provided with more than one planting unit can plant several parallel rows of seedlings for each passage; the gap between the rows can be adjusted by varying the distance between the units; it is also possible to obtain staggered or 'quincuncial' rows by arranging the units so that they are not aligned on one another.

Such a machine enables to achieve high degree of productivity, but it is rather expensive and requires an operator to be in constant attendance for each unit.

A unit capable of planting simultaneously two staggered rows of seedlings, for each passage and using just one operator, is known from US patent 6.394.010

This unit comprises two conveyors, namely a left and a right conveyor, and means for synchronised opening, adapted to alternately open the cups on said two conveyors. More in particular, the carousel comprises a plurality of cups, also in this case arranged as a circumference, but half of them have an opening roller in a raised and radially slightly shifted position.

Two L-shaped arms extend radially from the centre of the carousel towards the cups, with the head ends located approximately above the two conveyors at a different height and radial distance from the centre of the carousel. Thus, the first arm can engage only the rollers of half of the cups, opening them above one of the conveyors, whilst the second arm can engage only the rollers of the other half of the cups, opening them above the other conveyor. The cups of the one and other type are alternated on the carousel, so that the plants are dropped alternately into the right and the left conveyor.

Nevertheless, a unit of the type disclosed in US patent 6.394.010 still has certain drawbacks and disadvantages.

A first disadvantage is that this transplanting unit cannot effectively adjust the gap between the rows, because the cups, arranged as a circumference of the carousel, are at a fixed radial distance from the rotation axis of the carousel.

The gap between the rows, in fact, is adjusted by shifting the plowshares and the conveyors perpendicularly to the forward movement direction of the machine, but this means that the point of drop of the seedlings is shifted off the axis of the conveyors inlet port. The angle between the arms can also be increased or decreased, to shift the opening point of the cups and therefore the point of drop of the seedlings, but it is not possible to return it on the axis of the inlet port of the conveyors. The point of drop, in fact, follows a circumference arch of the carousel, whereas the inlet port of the conveyors is moving along a straight line, thus a certain misalignment is inevitable when the conveyors are shifted to vary the gap between the rows.

To compensate this misalignment, conveyors have to be used that have rather a wide inlet port. The disadvantages, in this case, are that the seedlings may be damaged by knocking against the walls of the tunnel; moreover, the blows slow the drop and alter it in an unpredictable manner, so that it is difficult to reach high working speeds; yet another problem is that synchronism with the ejection device can be lost, which causes incorrect positioning of the seedlings in the furrow.

Neither does this type of transplanting unit enable to arrange the seedlings in two parallel rows that are not staggered. It would not be possible to achieve this aim only with simplified and undifferentiated opening means, adapted to open all the cups on both the conveyors, because the operator can only fill the cups of the half carousel that is nearest him, but he cannot reach the half-carousel diametrically opposite: for this reason, the cups would be empty when passing onto the second conveyor.

Another disadvantage is that cups or, more generally, containers for seedlings of different types must be alternated on the carousel, which increases costs and complication.

Furthermore, when working on two rows it would be useful to increase the capacity of the carousel, but it must generally be limited to a maximum of 8 or 12 plants, to avoid excessive dimensions.

Still another problem is that seedlings dropped from the carousel follow a trajectory that is not vertical, because the carousel rotates continuously, and when the cups open the tangential speed of the seedlings is not negligible. This may cause the seedlings to knock against the walls of the conveyor, which represents a problem for the same reasons as those listed above.

The aim of the invention is to eliminate or reduce these disadvantages. The aim of the invention is therefore to realize a transplanting unit with a rotary carousel distributor, capable of simultaneously planting two rows of seedlings, that enables effective adjustement of the gap between the rows. More in detail, the aim of the invention is to regulate the gap keeping the point of drop from the carousel on the same axis as the conveyors.

Another aim is to make a transplanting unit that can be adapted to plant the seedlings arranged in staggered 'quincuncial' rows or in aligned rows that are not staggered.

Another aim of the invention is to provide a unit for transplanting vegetables in two parallel rows, without the need for a complicated carousel with differentiated containers and opening means thereof.

A further aim is to have a carousel with greater capacity, without increasing its diameter and therefore overall size of the unit.

Still another aim of the invention is to reduce the possibility that the seedlings dropped into the conveyors knock against the walls thereof.

These aims are achieved by the invention, consisting of a seedling transplanting unit with a rotary distributor, for planting seedlings arranged in two rows, comprising:
- a support frame that can be connected to an agricultural machine;
- a carousel rotationally supported by a substantially vertical axis;
- a plurality of containers for the seedlings, that are associated to said carousel;
- means for synchronised opening of said containers;
- two conveyors, associated with said frame by means enabling to shift them perpendicularly to the forward movement direction, said conveyors being located underneath the carousel to receive the seedlings that are periodically dropped when said containers open;
- driving means associated with said carousel;
**characterised in that** said containers are arranged in two concentric arrays, the one comprising the containers that are more internal and the other comprising the containers that are more external with respect to said axis, and that said conveyors are positioned, during the use, in a non-symmetrical arrangement with respect to said axis, at distances that are respectively equal to the radial distances from said axis of said two arrays of the containers.

To adjust the gap between the rows, keeping the point of drop of the seedlings on the same axis as the inlet port of the conveyors, means are provided to selectively modify the radial position of the containers with respect to the axis of the carousel.

To prevent the plants knocking against the walls of the conveyors, an intermittent rather than continuous drive is conveniently used.

The advantages of the invention are the possibility to adjust the gap between the rows, while maintaining efficient operation and in particular always dropping the seedlings on the same axis as the conveyors; the possibility of adapting the machine to plant in staggered or non-staggered rows; the fact that a carousel with differentiated and alternate cups is no longer necessary; the greater capacity of the carousel; the more regular operation without the seedlings knocking against the inlet port of the conveyors or against the walls thereof.

In order that the characteristics and advantages of the invention may be clearly and completely disclosed, reference will now be made, by way of examples that do not limit the scope of the invention, to the accompanying drawings, wherein:
fig. 1 is a side view of a seedling transplanting unit with a rotary distributor, according to the invention;
fig. 2 is a rear view of the unit of fig. 1, that has been adjusted to obtain the maximum gap between the two rows of vegetables;
figs 3a and 3b show the rotary carousel distributor of the unit in fig. 1, shown from above and in two different working positions;
figs 4 and 5 in particular show the adjustment of the radial position of the containers for the seedlings of the unit in fig. 1;
figs 6, 7 and 8 show constructional details of the unit in fig. 1.

Referring now to the figures, the invention relates to a seedling transplanting unit for simultaneously planting seedlings arranged in two parallel rows, that is generally referred to as 1, with a support frame 2 that can be connected to a tractor or other towing and/or actuating means.

The unit 1 comprises a rotary distributor, made by a carousel 3 that is rotationally supported by a substantially vertical axis 4, and which essentially comprises containers 5a and 5b, each one of them being capable to contain one of the seedlings to be planted. The transplanting unit further comprises conveyors 6a and 6b, located underneath the carousel 3, ejector means 7 and plowshares 8, associated with the frame 2.

The carousel 3 is actuated by driving means that makes it rotate when the machine advances in a straight line; means for synchronised opening of the containers 5a and 5b are also provided, to periodically drop the seedlings into underlying conveyors 6a and 6b.

According to the invention, containers 5a and 5b are arranged in two concentric arrays in relation to the axis 4 of the carousel 3.

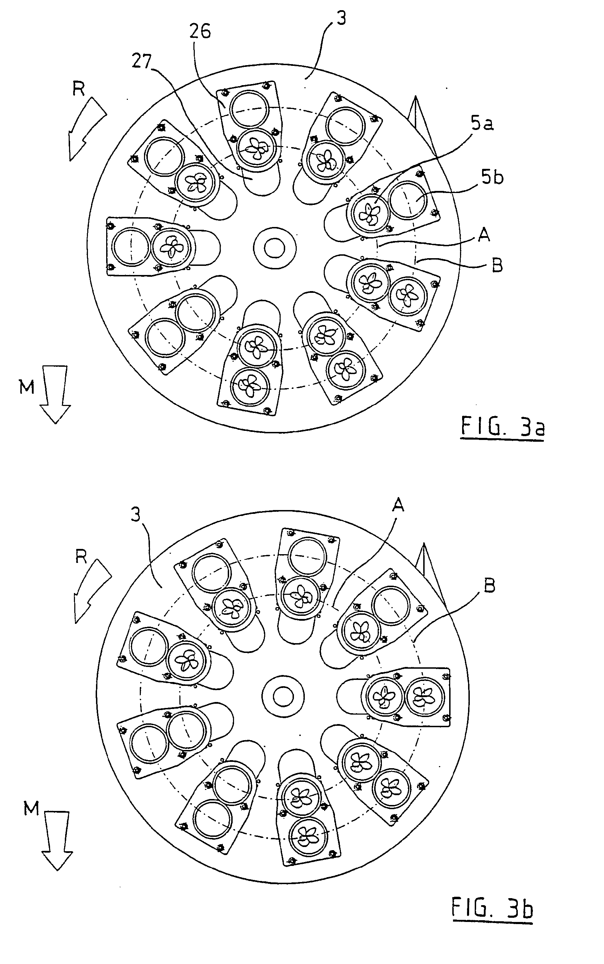

More in detail, as shown in figs. 3a and 3b, the containers 5a are nearer the axis 4, arranged on a first circumference A, whereas the containers 5b are more external with respect to the axis 4, and form a second circumference B.

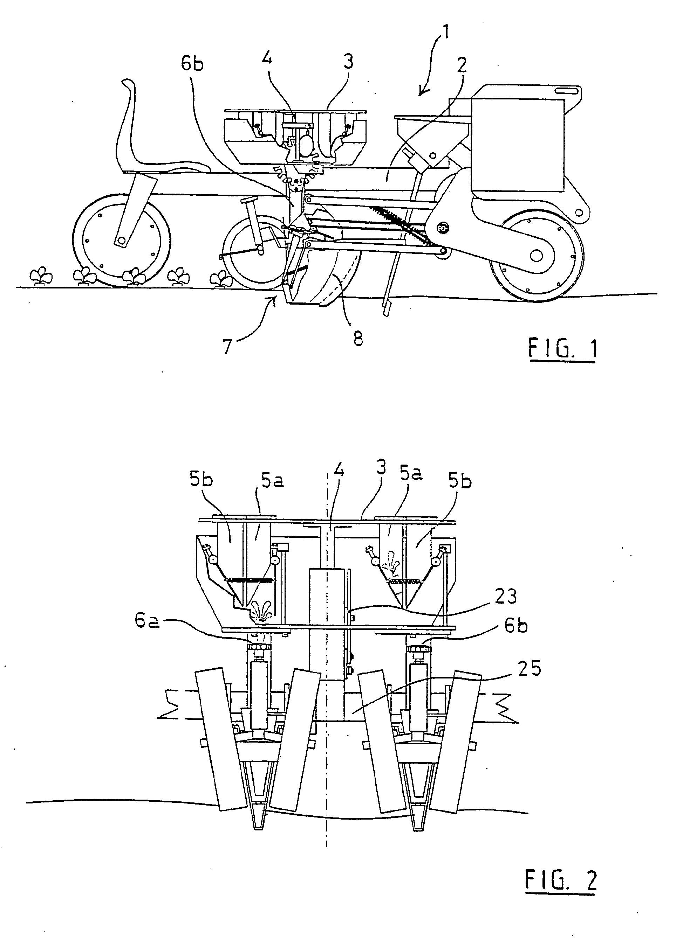

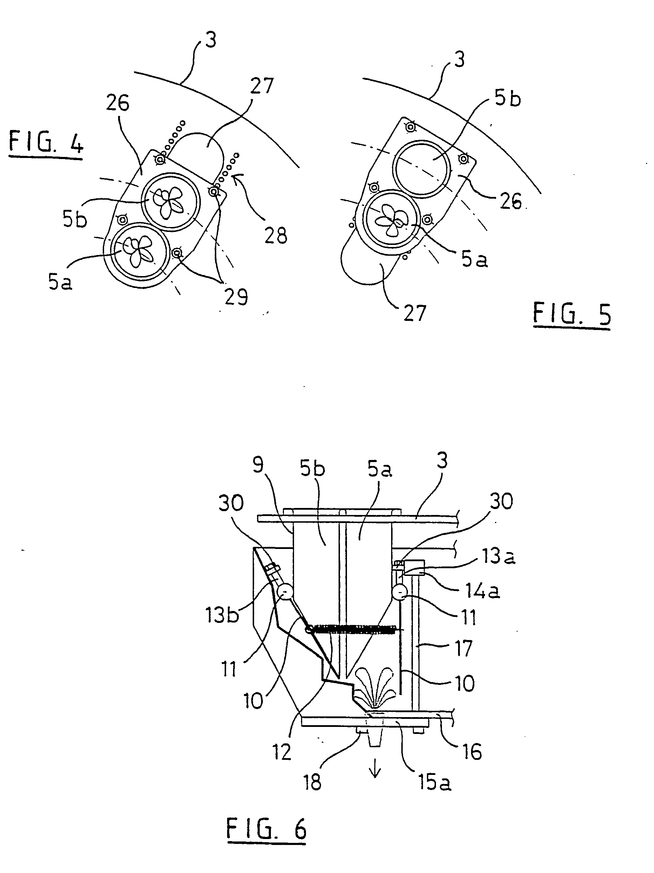

The containers 5a and 5b are identical, preferably arranged in mirrored pairs in relation to a vertical plane of symmetry, as shown, in particular, in figs. 2 and 6.

Advantageously, as shown in fig. 6, the containers are realized with tubes 9, with the bottom end cut obliquely and closed by a bottom door 10, the latter pivoting on a pivot 11 with a substantially horizontal axis.

The containers 5a, 5b also comprise elastic return means to keep the doors 10 normally closed. In the preferred embodiment, a spring 12 connects together the bottom doors 10 of each pair of containers 5a and 5b for keeping them closed.

The means for synchronised opening of the containers 5a and 5b essentially comprises two elements 14a and 14b located above the inlet port of the conveyors 6a and 6b, adapted to cooperate respectively with mechanical opening means of the containers 5a and 5b, conveniently made by levers 13a and 13b whose ends are fitted with rollers or bearings 30.

Said elements 14a and 14b are fixed, by means of uprights 17 having identical height, to plates 15a and 15b that are connected by bolts 18 to a shaped support 16, this last being fixed to the frame 2. Said support 16 comprises a plurality of holes 19 for the bolts 18, enabling selective positioning of the plates 15a and 15b.

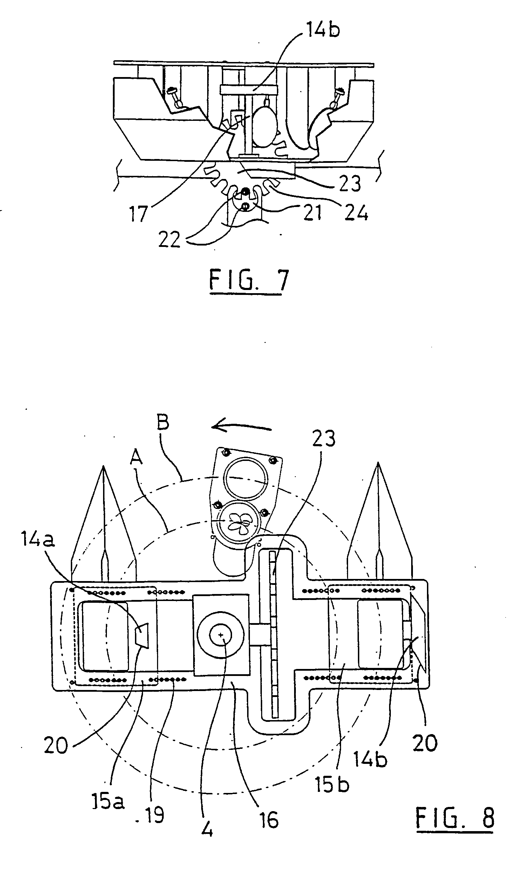

The element 14a remains inside the circumference A, while the element 14b is external to the circumference B; this positioning, which is shown in fig. 8, enables said elements 14a and 14b to cooperate respectively only with levers 13a and only with levers 13b.

Advantageously, elements 14a and 14b have a substantially tubular or prismatic shape, with inclined surfaces 20 realizing guides for said rollers 30.

Driving means of the carousel 3 advantageously comprise a driving wheel 21 provided with pins 22, and a driven wheel 23 provided with a plurality of radial grooves 24, wherein said pins engage said grooves. The wheels 21 and 23 thus realize a step drive and give the carousel 3 an intermittent rotation when the machine advances.

Conveyors 6a, 6b and respective planting units are positioned, during the use, in a non-symmetrical arrangement in relation to the axis 4, at distances from said axis that are respectively equivalent to the radiuses of the circumferences A and B. Said non-symmetrical arrangement is clearly visible in fig. 2.

In the preferred embodiment, the unit consisting of each conveyor 6a, 6b and of the respective plowshare and ejection device, is supported by a transversal arm 25, and can slide along said arm. Securing means of a known kind (not shown) enable the position of the conveyors 6a and 6b to be fixed on said arm 25 and prevent their shifting when the unit is working.

Each pair of containers 5a and 5b is associated with a plate 26, sliding in a radial slot 27 of the carousel 3, that can be locked in place with bolts 29, that can be selectively inserted in holes 28 arranged next to the slots 27. Said holes 28 enable the radial position of the plates 26 to be regulated by selecting between a plurality of intermediate positions comprised between two positions of minimum and maximum gap, which positions are shown respectively in fig. 4 and in fig. 5.

For quincuncially transplanting, the carousel 3 must comprise an odd number of pairs of containers 5a, 5b, in order that there are no diametrically opposed containers, whilst grooves 24 of the wheel 23 must be twice the number of pairs of containers. In the example shown, the carousel 3 comprises nine pairs of containers, so the wheel 23 is provided with eighteen grooves 24.

In the event, which is not shown, that the machine is adapted to transplant the seedlings arranged in non-staggered rows, the carousel 3 must comprise an even number of pairs of containers, and in this case there must be as many grooves 24 as there are pairs of containers.

Figs 3a and 3b also show the forward movement direction M of the machine and the rotation sense R of the carousel 3.

The invention works as following.

The unit, individually or together with other transplanting units, is connected to a tractor or other towing means. To obtain the desired gap between rows, the user shifts the conveyors 6a and 6b and respective planting units; adjusts the radial position of the containers 5a and 5b, making the plates 26 to slide in slots 27; then he locks the containers in place with bolts 29, placing the point of drop of the plants on the same axis as the inlet port of the underlying conveyors 6a and 6b. In the same way, he adjusts the position of the plates 15a and 15b on the shaped support 16, using the holes 19 corresponding to the holes 28, to make the position of the elements 14a and 14b coincide with the position of the rollers 30 of the opening levers 13a and 13b during rotation of the carousel 3.

When the machine advances in the direction M, the carousel 3 rotates intermittently in the sense indicated with R. Referring to the shown example, the wheel 23 with eighteen grooves rotates by regular steps of 360 / 18 = 20 degrees, so that the position of the carousel 3 of fig. 3a and the position of fig. 3b alternate continuously. In said positions, the elements 14a and 14b actuate the levers 13a and 13b respectively, thus opening alternately the containers 5a and 5b and dropping the seedlings into the conveyors. More in detail, the rollers 30 meet the elements 14a and 14b, run on the inclined faces 20 thereof and thereby actuate the opening levers 13a and 13b pivoted on the pivots 11. Fig. 6 shows, in particular, the opening of a container 5a, the carousel 3 being in the position of fig. 3a.

The quincuncial arrangement is obtained because a container 5a and a container 5b cannot open simultaneously, as only the situations of figs 3a and 3b can be realized, wherein just one container opens.

The possibility of adjusting the radial position of the containers, shown in figs 4 and 5, enables the opening point of the containers, and therefore the drop point of the seedlings, to be maintained always on the axis of the respective conveyors 6a, 6b. This enables high working speed without loss of synchronism and/or damage of the vegetables due to knocking against the inlet port of the conveyors.

Furthermore, the intermittent drive realized by wheels 21 and 23 reduces the risk that the plants knock against the walls of the conveyors, because the containers are stationary at the moment wherein they open, thus the seedlings fall with a substantially vertical trajectory, having no tangential speed due to the rotation of the carousel.

The arrangement of the containers in two concentric arrays also increases the capacity of the carousel 3, given a maximum diameter of the carousel itself.

For planting vegetables arranged in non-staggered rows, the carousel 3 can be realized with an even number of pairs of containers, for example ten, the wheel 23 therefore having the same number of grooves 24. The carousel 3 in this case rotates by steps of 360 / 10 = 36 degrees, and there are always two diametrically opposite containers that open at the same time on both conveyors.

It is clear that constructional details may be replaced with other technically equivalent ones without thereby falling outside the protective scope of the claims.

If technical features of the invention are mentioned in the claims and are followed by reference numbers in brackets, said reference numbers have been included for the sole purpose of increasing the comprehensibility of the claims, but by no means serve the purpose of limiting the construal of the elements that are identified thereby merely by way of example.

## Claims

1. A seedling transplanting unit (1) with a rotary distributor, for planting seedlings arranged in two rows, comprising:
- a support frame (2) that can be connected to an agricultural machine;
- a carousel (3) rotationally supported by a substantially vertical axis (4);
- a plurality of containers (5a, 5b) for the seedlings, that are associated to said carousel (3);
- means for synchronised opening of said containers (5a, 5b);
- two conveyors (6a, 6b), associated with said frame (2) by means enabling to shift them perpendicularly to the forward movement direction (M), said conveyors being located underneath the carousel (3) to receive the seedlings that are periodically dropped when said containers (5a, 5b) open;
- driving means associated with said carousel (3);
**characterised in that** said containers (5a, 5b) are arranged in two concentric arrays, the one comprising the containers (5a) that are more internal and the other comprising the containers (5b) that are more external with respect to said axis (4), and that said conveyors (6a, 6b) are positioned, during the use, in a non-symmetrical arrangement with respect to said axis (4), at distances that are respectively equal to the radial distances from said axis of said two arrays of the containers (5a, 5b).

2. A unit according to claim 1, **characterised in that** the radial distance of said containers (5a, 5b) from said axis (4) is selectively variable.

3. A unit according to claim 2, **characterised in that** said containers (5a, 5b) are fixed to plates (26) sliding in radial slots (27) of said carousel (3) and that they can be locked in place by multiple-selection, reversible fixing means (28, 29).

4. A unit according to claim 1, **characterised in that** said containers (5a, 5b) are identical and arranged in mirroring pairs in relation to a vertical plane of symmetry, each pair comprising one of the internal containers (5a) and one of the external containers (5b).

5. A unit according to claim 1, **characterised in that** said containers (5a, 5b) are made with tubes (9) that are closed at the bottom by doors (10) pivoted on pins (11).

6. A unit according to claims 1 and 2, **characterised in that** said means for synchronised opening comprises elements (14a, 14b) adapted to cooperate with mechanical opening means (13a, 13b) of said containers (5a, 5b), said elements being adapted to be positioned at a selectively variable distance from said axis (4).

7. A unit according to claim 6, **characterised in that** said elements (14a, 14b) are coupled to plates (15a, 15b), that are connected to a support (16) through multiple-selection connecting means (18, 19).

8. A unit according to claim 1, **characterised in that** said driving means comprise a driving wheel (21) with pins and a grooved driven wheel (23).

## Patentansprüche

1. Pflanzgerät für Setzlinge (1) mit einem Rotationsverteiler zum zweireihigen Anpflanzen von Setzlingen, bestehend aus:
• einem Rahmengestell (2), das mit einer landwirtschaftlichen Maschine verbunden werden kann;
• einem Umlaufförderer (3), rotationsgestützt durch eine im wesentlichen senkrechte Achse (4);
• einer Mehrzahl von Behältern (5a, 5b) für die Setzlinge, die mit genanntem Umlaufförderer (3) verbunden sind;
• Mitteln zum zeitgleichen Öffnen der genannten Behälter (5a, 5b);
• zwei Fördermitteln (6a, 6b), verbunden mit genanntem Rahmengestell (2) durch Mitteln, die es ermöglichen, sie senkrecht in Richtung Vorwärtsbewegung (M) zu verschieben, wobei genannte Fördermittel unterhalb des Umlaufförderers (3) angeordnet sind, um die Setzlinge aufzunehmen, die periodisch herausfallen, wenn sich genannte Behälter (5a, 5b) öffnen;
• mit genanntem Umlaufförderer (3) verbundenen Antriebsmittel;
**dadurch gekennzeichnet, dass** genannte Behälter (5a, 5b) in zwei konzentrischen Reihen angeordnet sind, wobei eine die bezüglich der genannten Achse (4) weiter innen liegenden Behälter (5a) umfasst und die andere die weiter aussen liegenden Behälter (5b) umfasst und dass genannte Fördermittel (6a, 6b) während des Einsatzes in einer nichtsymmetrischen Anordnung bezüglich der genannten Achse (4) positioniert sind, in Abständen, die jeweils gleich gross wie die radialen Abstände von genannter Achse der genannten zwei Reihen der Behälter (5a, 5b) sind.

2. Ein Gerät nach Anspruch 1, **dadurch gekennzeichnet, dass** der radiale Abstand der genannten Behälter (5a, 5b) von genannter Achse (4) wahlweise variabel ist.

3. Ein Gerät nach Anspruch 2, **dadurch gekennzeichnet, dass** genannte Behälter (5a, 5b) an Blechplatten (26) befestigt sind, die in strahlenförmigen Kerben (27) des genannten Umlaufförderers (3) gleiten und dass sie durch umkehrbare Mehrfach-Wahl-Befestigungsmittel (28, 29) arretiert werden können.

4. Ein Gerät nach Anspruch 1, **dadurch gekennzeichnet, dass** genannte Behälter (5a, 5b) identisch sind und in Spiegelpaaren in Bezug auf eine senkrechte Symmetrieebene angeordnet sind, wobei jedes Paar aus einem der inneren Behälter (5a) und aus einem der äusseren Behälter (5b) besteht.

5. Ein Gerät nach Anspruch 1, **dadurch gekennzeichnet, dass** genannte Behälter (5a, 5b) mit Rohren (9) gebildet sind, die am Boden durch auf Bolzen drehbar gelagerten Türen geschlossen sind.

6. Ein Gerät nach Anspruch 1 und 2, **dadurch gekennzeichnet, dass** genanntes Mittel zum zeitgleichen Öffnen Elemente (14a, 14b) umfasst, die geeignet sind, um mit mechanischen Öffnungsmittel (13a, 13b) der genannten Behälter (5a, 5b) zusammenzuwirken, wobei genannte Elemente geeignet sind, um in einem wahlweise variablen Abstand von genannter Achse (4) positioniert zu werden.

7. Ein Gerät nach Anspruch 6, **dadurch gekennzeichnet, dass** genannte Elemente (14a, 14b) an Blechplatten (15a, 15b) angekoppelt sind, die durch Mehrfach-Wahl-Verbindungsmittel (18, 19) an ein Auflager befestigt sind.

8. Ein Gerät nach Anspruch 1, **dadurch gekennzeichnet, dass** genanntes Antriebsmittel aus einem Treibrad (21) mit Bolzen und einem genutetem Antriebsrad (23) besteht.

## Revendications

1. Unité de repiquage de plants (1) avec un distributeur rotatif pour planter des plants disposés en deux rangées, comprenant :
• un châssis de support (2) pouvant être raccordé à une machine agricole ;
• un carrousel (3) posé de manière rotative sur un axe substantiellement vertical (4) ;
• plusieurs récipients (5a, 5b) pour les plants, associés audit carrousel (3) ;
• un dispositif pour synchroniser l'ouverture desdits récipients (5a, 5b) ;
• deux convoyeurs (6a, 6b) associés audit châssis de support (2) par un dispositif permettant de les déplacer perpendiculairement à la direction de mouvement vers l'avant (M), lesdits convoyeurs étant placés en dessous du carrousel (3) pour recevoir les plants tombant périodiquement lorsque les récipients (5a, 5b) sont ouverts ;
• un dispositif de conduite associé audit carrousel (3) ;
**caractérisée par le fait que** lesdits récipients (5a, 5b) sont disposés en deux ensembles concentriques, l'un comprenant les récipients (5a) plus proches et l'autre les récipients (5b) plus éloignés de l'axe (4) et que lesdits convoyeurs (6a, 6b) sont placés pendant l'utilisation selon une disposition non symétrique par rapport audit axe (4), à des distances respectivement égales aux distances radiales avec ledit axe desdits deux ensembles de récipients (5a, 5b).

2. Unité selon la revendication 1, **caractérisée par le fait que** la distance radiale desdits récipients (5a, 5b) avec ledit axe (4) est sélectivement variable.

3. Unité selon la revendication 2, **caractérisée par le fait que** lesdits récipients (5a, 5b) sont fixés à des plaques (26) coulissant dans des fentes radiales (27) dudit carrousel (3) et qu'ils peuvent être verrouillés en position par un dispositif de fixation réversible à sélection multiple (28, 29).

4. Unité selon la revendication 1, **caractérisée par le fait que** lesdits récipients (5a, 5b) sont identiques et disposés en paires symétriques par rapport à un plan vertical, chaque paire comprenant l'un des récipients internes (5a) et l'un des récipients externes (5b).

5. Unité selon la revendication 1, **caractérisée par le fait que** lesdits récipients (5a, 5b) sont réalisés avec des tubes (9) dont le fond est fermé par des portes (10) pivotant sur des goupilles (11).

6. Unité selon les revendications 1 et 2, **caractérisée par le fait que** ledit dispositif pour synchroniser l'ouverture comprend des éléments (14a, 14b) prévus pour coopérer avec un dispositif d'ouverture mécanique (13a, 13b) desdits récipients (5a, 5b), lesdits éléments étant prévus pour être placés à une distance sélectivement variable dudit axe (4).

7. Unité selon la revendication 6, **caractérisée par le fait que** lesdits éléments (14a, 14b) sont associés à des plaques (15a, 15b), qu'ils sont reliés à un support (16) par l'intermédiaire d'un dispositif de raccord à sélection multiple (18, 19).

8. Unité selon la revendication 1, **caractérisée par le fait que** ledit dispositif d'entraînement comprend une roue d'entraînement (21) avec des goupilles et une roue à rainures entraînée (23).
